**Europäisches Patentamt**

**European Patent Office**

**Office européen des brevets**

(19)

(11) Numéro de publication : **0 266 269 B1**

(12) # FASCICULE DE BREVET EUROPEEN

(45) Date de publication du fascicule du brevet :
**05.06.91 Bulletin 91/23**

(51) Int. Cl.⁵ : **F02M 55/02, B23P 15/00**

(21) Numéro de dépôt : **87402398.9**

(22) Date de dépôt : **23.10.87**

(54) **Procédé de fabrication d'une rampe d'injection de carburant.**

(30) Priorité : **31.10.86 FR 8615206**

(43) Date de publication de la demande :
**04.05.88 Bulletin 88/18**

(45) Mention de la délivrance du brevet :
**05.06.91 Bulletin 91/23**

(84) Etats contractants désignés :
**AT BE CH DE ES FR GB GR IT LI LU NL SE**

(56) Documents cités :
**EP-A- 0 132 418
DE-A- 2 833 659
DE-A- 3 014 066
FR-A- 2 169 088
FR-A- 2 274 854
FR-A- 2 437 503
FR-A- 2 444 813
FR-A- 2 452 005
FR-A- 2 507 212
NL-A- 8 202 117**

(56) Documents cités :
**US-A- 3 314 278
US-A- 3 354 689
METALS HANDBOOK, Properties and selection: nonferrous alloys and pure metals, 9ième édition, vol. 2, 1983, pages 6-8, American Society for Metals, Metals Park, Ohio, US;
"Introduction to aluminum and aluminum alloys"**

(73) Titulaire : **G.DE BRUYN OZOIR S.A.
4, rue Robert Schumann
F-77330 Ozoir La Ferriere (FR)**

(72) Inventeur : **De Bruyn, Gérard
30, rue Auguste Blanqui
F-94250 Gentilly (FR)**
Inventeur : **Ciecko, Daniel
2, rue Romain Rolland
F-94250 Gentilly (FR)**

(74) Mandataire : **Michelet, Alain et al
BUGNION ASSOCIES 55, rue Boissonade
F-75014 Paris (FR)**

Jouve, 18, rue Saint-Denis, 75001 PARIS

## Description

L'invention concerne un procédé de fabrication d'une rampe d'injection de carburant.

On connaît déjà (brevet européen 132 418) un procédé de fabrication d'une rampe d'injection de carburant en alliage d'aluminium, qui comprend les étapes successives suivantes : matriçage à chaud, usinage, forage, ébavurage, soudage ou brasage d'un bouchon d'extrémité. Une rampe selon ce procédé de fabrication est monobloc, sans soudure – à l'exception de celle pour le bouchon d'extrémité –, légère. De plus, les intersections intérieures entre le tube principal et la prise d'injecteur et de carburant sont arrondies.

La présente invention concerne des perfectionnements pouvant être apportés au procédé et à la rampe mentionnés précédemment. Ces perfectionnements consistent d'abord à tirer partie du ou des voiles de refoulement d'alliage d'aluminium constitués lors de l'étape de matriçage à chaud, et qui sont normalement considérés comme indésirables et donc à éliminer. Selon l'invention, au lieu d'éliminer ces voiles, on laisse subsister tout ou partie du bord de chaque voile attenant au tube principal de la rampe, ce qui constitue une saillie de rigidification longitudinale continue ou non et monobloc venue de fabrication avec le tube principal, dont l'effet de rigidification est surprenant compte tenu des dimensions de cette saillie (par exemple une section droite transversale de forme générale carrée de 2, 5 mm de côté). Cette rigidification est particulièrement importante pour une rampe d'injection de carburant qui doit résister aux chocs. Elle est obtenue sans augmentation substantielle du poids d'alliage d'aluminium utilisé, sans augmentation substantielle de l'encombrement de la rampe, sans que le procédé de fabrication ne soit plus complexe, plus long, plus coûteux. De plus, on utilise d'autres zones de voiles comme moyen de fixation.

Selon une autre caractéristique de l'invention, la rampe comporte un bossage de maintien d'un clip de fixation de l'injecteur porté par la prise d'injecteur dont la face latérale extérieure est cylindrique à base circulaire et dépourvue, à l'extérieur, d'un évidement ou, au contraire, d'une gorge comme cela est généralement le cas dans l'état de la technique (brevets français 2 452 005 et 2 444 813).

Ces caractéristiques sont obtenues avec une rampe monobloc présentant, en combinaison, les avantages de légèreté, d'absence de soudure – à l'exception éventuellement d'un bouchon d'extrémité –, les avantages liés à l'emploi d'un alliage d'aluminium – par opposition à l'état de la technique utilisant de l'acier (brevets français 2 437 503, 2 507 212 et 2 274 854) – aux raccordements du tube principal et des prises de carburant et d'injecteur, de forme incurvée, à des formes pouvant être tourmentées notamment en ce qui concerne l'orientation des prises d'injecteur et de carburant par rapport au tube principal, à une excellente rigidité et à une résistance à la torsion et au flambage ainsi qu'aux chocs, à une excellente résistance aux pressions élevées, avec une structure interne homogène du matériau constituant la rampe – par opposition à l'état de la technique illustré par les brevets français 2 437 503, 2 507 212, 2 2274 854, 2 169 088 et 2 444 813 – les fibres d'alliage d'aluminium étant toutes orientées dans le même sens, la réalisation étant faite par matriçage. Ces caractéristiques sont obtenues par opposition à l'état de la technique dans lequel, en premier lieu et le plus couramment, la rampe est constituée par un tube d'acier sur lequel sont soudées les prises d'injecteur et de carburant (brevet français 2 452 005 et demande de brevet allemande non examinée 3 132 432 ce qui présente les inconvénients de créer des zones de faiblesse à l'endroit des soudures ou brasures, de rendre possible la corrosion de la rampe, de favoriser le dépôt de calamine, de favoriser la déformation de la rampe, notamment lors de son passage au four, donc de ne pas permettre une grande précision, la rampe étant enfin lourde ; en second lieu, la rampe comprend des tronçons de tube, en acier ou en laiton et des raccords en caoutchouc flexible (brevet français 2 444 813) ce qui est source de fuites, par détérioration des raccords, est peu sûr et d'un montage complexe ; en troisième lieu, la rampe est réalisée par moulage (brevet anglais 2 073 316), auquel cas seules les formes pouvant être moulées peuvent être réalisées, mais la rampe est poreuse et a une faible résistance mécanique ; en quatrième lieu, la rampe est réalisée par extrusion (brevet français 2 169 088), ce qui rend la réalisation des coupelles d'injecteurs très complexe et nécessite de nombreux usinages.

L'invention permet également la réalisation d'une rampe plate comprenant plusieurs tubes principaux réunis par un ou généralement plusieurs tubes transversaux, les prises d'injecteur et de carburant ainsi que les moyens de fixation étant associés à ces tubes principaux et/ou transversaux, les voiles de refoulement étant gardés, en totalité ou en partie, comme zones fonctionnelles, notamment pour des moyens de fixation. Une telle rampe forme une nappe, notamment plane ou sensiblement plane, par opposition aux rampes de l'état de la technique essentiellement longilignes. Une telle rampe plate spécialement conçue peut alors être intégrée commodément dans certains moteurs.

A cet effet, l'invention propose un procédé de fabrication d'une rampe d'injection de carburant monobloc du type comportant :

- au moins un tube creux principal rectiligne auquel sont associés rigidement
- au moins un embout de prise de carburant
- au moins un, et généralement plusieurs, prises d'injecteurs
- des moyens de fixation de la rampe

dans lequel :

a) on porte une billette en alliage d'aluminium à une température de l'ordre de 440°C à 450°C et on la place ainsi portée à chaud dans une matrice en deux parties ;

b) on réalise un matriçage à chaud de la billette et, à cet effet, on la frappe, par l'intermédiaire de la matrice, de manière à lui donner une forme primaire pleine, correspondant au moins sensiblement à la forme extérieure de la rampe à fabriquer et comportant, en outre, un ou plusieurs voiles axiaux, notamment longitudinaux, constitués par l'alliage d'aluminium refoulé ;

c) on laisse refroidir la forme primaire ainsi réalisée jusqu'à température ambiante ;

d) on effectue un premier usinage à froid de la forme primaire à savoir on coupe aux dimensions axiales exactes souhaitées ;

e) on enlève la (ou les) zone(s) superflue(s) des voiles de refoulement, de manière à obtenir une forme secondaire pleine correspondant au moins partiellement précisément à la forme extérieure de la rampe à fabriquer en vue de permettre ultérieurement un maintien en position précise ;

f) on place la forme secondaire dans un montage de précision et on associe rigidement la forme secondaire à ce montage, notamment par serrage mécanique, de manière que la forme secondaire soit maintenue fermement et dans une position précise par le montage, les extrémités de la forme secondaire devant comporter un perçage restant accessible de l'extérieur ;

g) on fore à froid la forme secondaire à partir des extrémités au moyen d'un ou plusieurs forets pour réaliser successivement le perçage principal du tube principal et les perçages secondaires de prise de carburant et de prise d'injecteur, et obtenir ainsi une forme tertiaire percée ;

h) on effectue un second usinage de finition à froid de la forme tertiaire pour la réalisation de détail des embouts de jonction des prises de carburant notamment par filetage de l'extrémité de la rampe, des prises d'injecteur et des moyens de fixation de la rampe ;

i) on procède à un ébavurage électrochimique et à un nettoyage,

caractérisé en ce que les moyens de fixation de la rampe sont réalisés par l'enlèvement seulement partiel des voiles de refoulement dans l'étape e) et par usinage des zones conservées desdites voiles dans l'étape h).

Les autres caractéristiques de l'invention seront bien comprises à l'aide des dessins annexés :

– la figure 1 est une vue schématique des différentes étapes du procédé selon l'invention,

– les figures 2A et 2B sont deux vues schématiques d'une forme primaire de la rampe selon l'invention, illustrant l'enlèvement des zones superflues du voile de refoulement,

– les figures 3 et 4 sont deux vues schématiques en élévation selon deux directions perpendiculaires l'une à l'autre d'une forme de réalisation possible mais non limitative d'une rampe pouvant être réalisée par le procédé selon l'invention,

– la figure 5 est une vue schématique en coupe selon la ligne V-V de la figure 3 illustrant une prise de l'injecteur de la rampe de la figure 3 avec un clip de maintien d'injecteur,

– la figure 6 est une vue schématique en coupe selon la ligne VI-VI de la figure 3 illustrant un embout de prise de carburant de la rampe de la figure 3,

– les figures 7 et 8 sont deux vues schématiques respectivement en élévation et de coté d'un clip de maintien d'injecteur,

– la figure 9 est de vue schématique d'extrémité de la rampe de la figure 3 associée à un clip selon les figures 7 et 8,

– la figure 10 est une vue schématique en élévation illustrant des zones fonctionnelles du voile de refoulement,

– les figures 11 et 12 sont deux vues schématiques respectivement en élévation et de côté d'une forme de réalisation possible mais non limitative d'une rampe plate pouvant être réalisée par le procédé selon l'invention,

–la figure 13 est une vue schématique d'une installation selon l'invention.

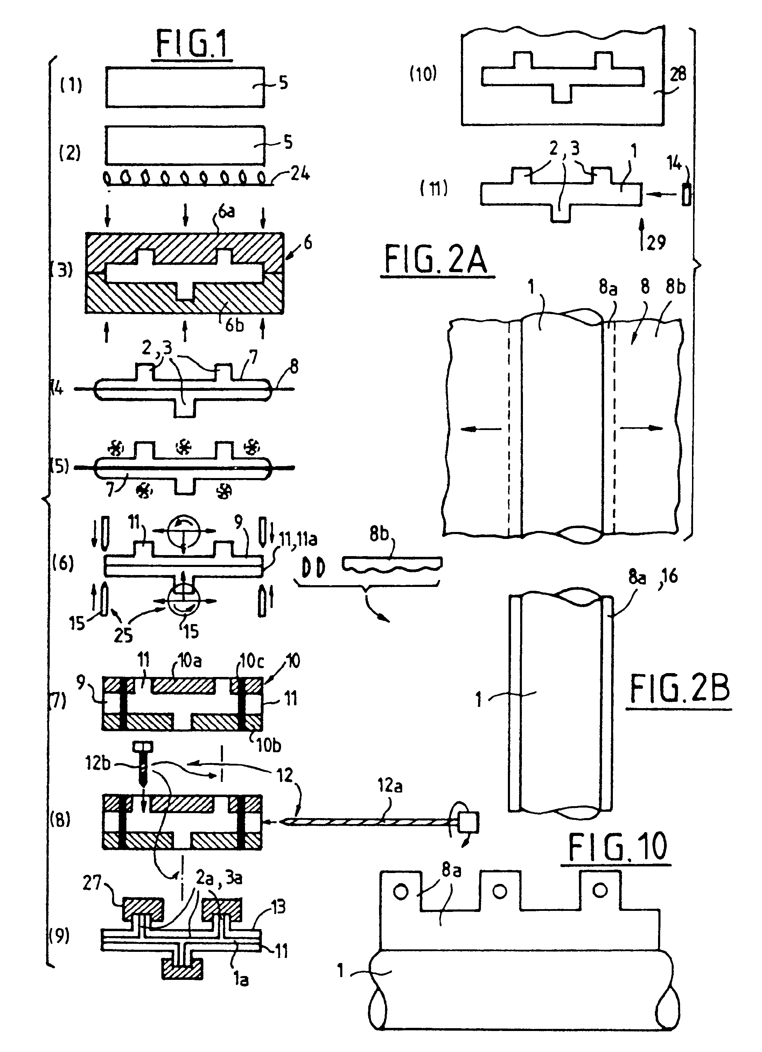

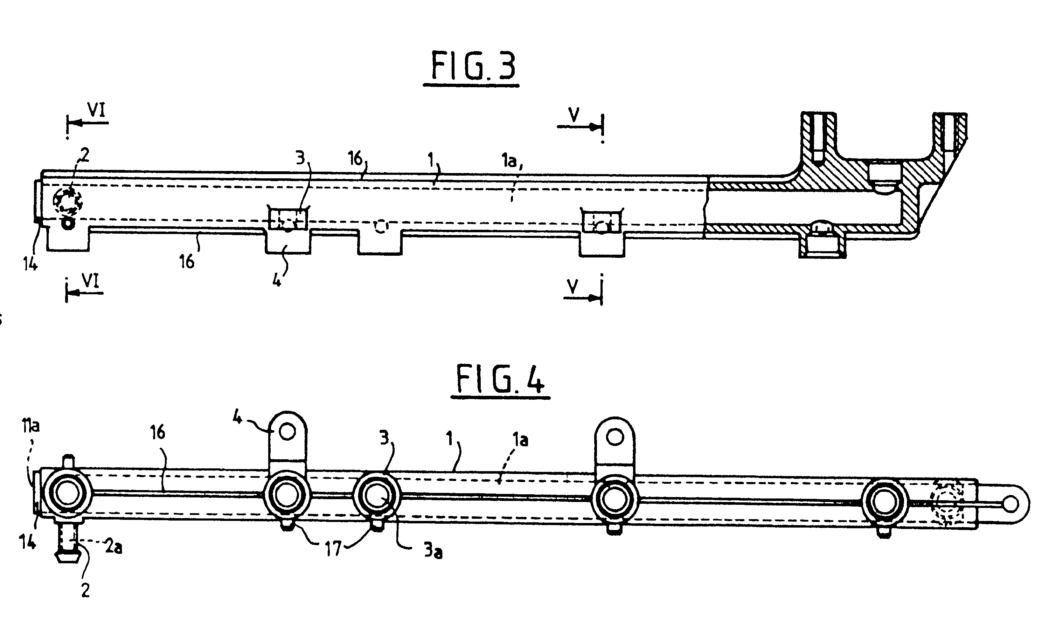

L'invention concerne d'abord (figure 1), un procédé de fabrication d'une rampe d'injection de carburant monobloc du type comportant (figures 3 et 4), le plus généralement, au moins un et, le plus fréquemment ou simplement, un seul tube creux principal 1, rectiligne, auquel sont associés rigidement au moins un embout de prise de carburant 2, au moins un et généralement plusieurs prises d'injecteurs 3 et des moyens 4 de fixation de la rampe.

Le procédé de fabrication selon l'invention comporte les étapes suivantes :

• On porte une billette 5 en alliage d'aluminium à une température de l'ordre de 440°C à 450°C et on la place ainsi portée à chaud dans une matrice 6 en deux parties 6a, 6b.

• On réalise un matriçage à chaud de la billette 5 et, à cet effet, on la frappe, par l'intermédiaire de la matrice 6, de manière à lui donner une forme primaire pleine 7, correspondant au moins sensiblement à la forme extérieure de la rampe à fabriquer et comportant, en outre, un ou plusieurs voiles axiaux 8, notamment longitudinaux, constitués par l'alliage d'aluminium refoulé.

• On laisse refroidir la forme primaire 7 ainsi réalisée jusqu'à température ambiante.

• On effectue un premier usinage à froid de la forme primaire 7, à savoir, essentiellement :

– On la coupe aux dimensions axiales exactes souhaitées.

– On enlève la ou les zones superflues 8b, des voiles de refoulement 8, tout en laissant subsister les zones fonctionnelles 8a, de manière à obtenir une forme secondaire pleine 9, correspondant au moins partiellement précisément à la forme extérieure de la rampe à fabriquer en vue de permettre ultérieurement un maintien en position précise.

• On place la forme secondaire 9 dans un montage de précision 10 et on associe rigidement la forme secondaire 9 à ce montage 10, notamment par serrage mécanique, de manière que la forme secondaire 9 soit maintenue fermement et dans une position précise par le montage 10, les extrémités 11 de la forme secondaire 9 devant comporter un perçage restant accessible de l'extérieur.

• On fore à froid la forme secondaire 9 à partir des extrémités 11 au moyen d'un ou plusieurs forets 12 pour réaliser successivement le perçage principal 1a du tube principal 1 et les perçages secondaires 2a, 3a de prise de carburant et de prise d'injecteur, et obtenir ainsi une forme tertiaire 13 percée.

• On effectue un second usinage de finition à froid de la forme tertiaire 13 pour la réalisation de détail des embouts de jonction des prises de carburant 2, notamment par filetage de l'extrémité de la rampe, des prises d'injecteur 3 et des moyens 4, de fixation de la rampe.

• On procède à un ébavurage électrochimique et à un nettoyage.

• et, le cas échéant, si nécessaire, on fixe rigidement à l'extrémité du tube principal un bouchon 14 par soudage ou brasage.

La billette 5 utilisée pour la mise en oeuvre du procédé, a, par exemple, une forme générale parallélépipédique ou cylindrique et est en alliage d'aluminium notamment un alliage tels que A-G3M (norme AFNOR.004) ou A1MO3 (norme DIN 1749).

La billette 5 est portée à chaud à une température permettant une déformation par matriçage. La forme primaire 7 comporte celles extérieures et générales du tube principal 1, du ou des embouts 2, des prises d'injecteur 3 et des moyens de fixation 4. Toutefois, les formes de détail et les perçages ne sont pas, encore réalisés dans cette phase du procédé.

Les voiles 8 sont généralement disposés dans un plan axial du tube principal 1, de part et d'autre de celui-ci, en fonction du plan de joint des deux parties 6a, 6b de la matrice 6. Ce plan axial du tube principal peut être, le cas échéant, celui de tout ou partie des axes d'embout de prise de carburant 2 ou de prise d'injecteur 3 ou, au contraire ne pas comporter ces axes. Les voiles 8 s'étendent, normalement, sur toute la longueur du tube principal 1 ainsi que axialement à partir des extrémités du tube 1. L'étendue des voiles à partir du tube principal 1, dépend de la quantité d'alliage d'aluminium refoulée, le bord libre du voile 8 pouvant donc avoir une forme et une position assez variable. Au moins au voisinage du tube principal 1, l'épaisseur du voile 8 est connue et plus ou moins constante. En variante, un voile 8 se présente sous la forme d'une nappe plus ou moins incurvée, selon la forme de la jonction entre les deux parties 6a, 6b de la matrice 6.

Du fait du procédé utilisé les fibres de l'alliage constituant la forme primaire 7 sont orientées parallèlement les unes aux autres en faisceau.

La phase de refroidissement de la forme primaire 7 vise à amener celle-ci à une température ou elle peut être manipulée sans modification de la forme et permettant un usinage à froid.

La coupe aux dimensions axiales exactes souhaitées permet d'enlever les parties extrêmes libres du tube principal 1 et les prolongements axiaux des voiles 8. Elle permet la réalisation de deux faces d'extrémité 11a du tube principal, nettes et d'écartement très précis – à la précision de la position des moyens de coupe 15 utilisés. Ces faces d'extrémité 11a ainsi réalisées constituent une référence dimensionnelle de base essentielle pour la précision de la mise en oeuvre du procédé.

Les zones superflues 8b des voiles de refoulement qui sont enlevées sont, outre les prolongements axiaux des voiles 8 mentionnés précédemment, les zones des voiles 8 les plus éloignées du tube principal 1 et, éventuellement, des embouts 2 et prises 3, donc les zones attenantes au bord libre du voile 8. Inversement, les zones fonctionnelles 8a du voile 8 sont attenantes du tube 1 tout en étant plus ou moins proches de celui-ci, selon la fonction devant être remplie (rigidification ou fixation notamment ainsi que mentionné ci-dessus). L'enlèvement des zones superflues 8a peut être effectuées par coupe avec une grande précision dimensionnelle et ceci en combinaison avec la référence constituée par les faces d'extrémités 11a.

La forme secondaire 9 comporte donc certaines caractéristiques dimensionnelles très précises constituant des références 8 dimensionnelles et de position (faces d'extrémité 11a, limite des zones fonctionnelles 8a) alors que, par ailleurs, les perçages ne sont pas réalisés pas plus que la finition de détail. Ces références dimensionnelles sont telles que la forme secondaire peut coopérer, avec précision, avec le montage 10.

Le montage 10 peut comporter, par exemple, deux parties 10a, 10b réunies l'une à l'autre par des moyens mécaniques de serrage 10c.

Comme il est mentionné plus haut, le montage 10 est conçu de manière que la forme secondaire 9 étant placée et maintenue fermement par le montage 10 à froid, ses extrémités 11 devant être percées restent accessibles. Ces extrémités 11 sont les extrémités 11a du tube principal 1 et les extrémités 11b et 11c des embouts 2 et prises 3.

Lors du forage, la forme secondaire 9 est maintenue fermement par le montage 10, lui-même maintenu en position relativement aux axes des forets 12. Les perçages secondaires 2a, 3a, sont forés à partir des extrémités 11b, 11c simultanément ou successivement. La précision de la position des perçages 1a, 2a, 3a est assurée d'une part par la précision de la position de la forme secondaire 9 dans le montage 10 ainsi qu'en a été mentionné ci-dessus et, d'autre part, par la précision de la position des forets 12 eux-même.

Il convient d'observer que la technique de forage utilisée permet non seulement la réalisation des perçages 1a, 2a, 3a, précis aux dimensions et en position mais également l'obtention de parois minces et de jonctions d'excellentes qualités entre les perçages 1a, 2a, 3a.

Le second usinage vise à réaliser les finitions non encore réalisées à l'occasion du premier usinage et concernant notamment les formes extérieures des embouts 2, prises 3, moyens 4 et les débouchés des perçages 1a, 2a, 3a.

L'ébavurage électrochimique et le nettoyage ont pour fonction d'éliminer toutes traces d'aspérités non souhaitées, de copeaux, de saletés, de traces de bain électrochimique. De plus, l'ébavurage électrochimique permet d'arrondir les jonctions entre le perçage 1a et les perçages 2a, 3a.

Dans le cas ou, selon la forme de réalisation de rampe souhaitée, le débouché du perçage principal dans l'extrémité 11a n'est pas souhaité, on peut fermer ce débouché par un bouchon fixe par soudage ou brasage.

Il est à noter que le procédé employé permet la réalisation de perçages borgnes 1a, 2a, 3a.

Selon l'invention, on enlève les zones superflues 8b du voile de refoulement 8 en laissant subsister tout ou partie du bord du voile attenant au tube principal 1, de manière à constituer au moins une saillie de rigidification 16 longitudinale continue ou non monobloc et venue de fabrication avec le tube principal.

On garde aussi comme zone fonctionnelle 8a des zones constituant les moyens de fixation 4.

Egalement, selon l'invention, on utilise une matrice 6 et on réalise un matriçage tel qu'on constitue au moins un bossage 17 transversal sur une prise d'injecteur 3, ce bossage 17 étant monobloc et venant de fabrication avec le tube principal 1 et la prise d'injecteur 2.

Ainsi que cela résulte de la description qui précède et du procédé selon l'invention, le tube principal 1, les embouts 2, les prises d'injecteur 3, les moyens de fixation 4 (constitué à partir du voile 8), la ou les saillies 16, les bossages 17 sont réalisés simultanément lors du matriçage et de l'usinage et forment un ensemble unitaire monobloc sans soudure ou brasure, sans pièce rapportée. Les fibres de l'alliage d'aluminium sont inclinées dans le sens le plus favorable à la tenue de la rampe.

Dans une forme de réalisation possible, on utilise une matrice 6 et on matrice de manière qu'on utilise une rampe d'injection plate constituée de plusieurs tubes principaux 18, 19, 20 réunis par un ou plusieurs tubes transversaux 21, 22 ; on fore de manière que les conduits de tubes principaux et des tubes transversaux 18, 19, 20, 21, 22 soient en communication ; on fixe par brasage ou soudage sur un tube principal ou/et transversal un ou plusieurs bouchons 14 d'obturation des extrémités de forage inutilisées.

L'invention propose ensuite une installation (figure 13) pour la mise en oeuvre du procédé qui consiste en une chaîne de fabrication comportant d'amont en aval et plus ou moins imbriqués un poste 23 de matriçage auquel sont associés des moyens de chauffage 24, un premier poste d'usinage 25 comportant des moyens de coupe 15, un poste de forage 26, un second poste d'usinage 27 distinct ou non du premier poste d'usinage, un poste 28 d'ébavurage électrochimique et de nettoyage et, éventuellement un poste 29 de soudage ou brasage d'un bouchon.

La chaîne de fabrication peut être en une implantation unique ou, au contraire, en plusieurs implantations distinctes.

Le poste 23 comprend la matrice 6 en deux parties 6a, 6b associée aux moyens de chauffage 24 et permet de porter à chaud la billette 5 et de lui conférer la forme primaire 7. A cet effet, les deux parties 6a, 6b de la matrice 6 forment une empreinte correspondant à la forme extérieure de la forme primaire 7. A la matrice 6 sont associés des moyens de frappe manuels ou non.

Le premier poste d'usinage 25 comporte les moyens de coupe 15 permettant de couper la forme primaire 7 aux dimensions axiales souhaitées et d'enlever les zones superflues 8b des voiles 8. Les moyens de coupe 15 sont adaptés à l'alliage à couper.

Entre les deux postes 23, 25 peut, éventuellement être interposé un poste de refroidissement apte à ramener la forme primaire 7 de la température de la billette 5 à la température ambiante. En général, la forme primaire 7 est refroidie à l'air libre sans la nécessité d'un poste de refroidissement spécifique.

Le poste de forage 26 peut se présenter sous la forme d'une machine comportant en premier lieu un et généralement plusieurs supports juxtaposés pour des montages 10. Chaque montage 10 peut être réalisé en plusieurs parties – notamment deux – 10a, 10b ayant une empreinte correspondant à la forme secondaire 9. Ainsi qu'il a été déjà mentionné ci-dessus, la coupe préalable de la forme primaire dans le poste d'usinage et coupe 25, 15 permet d'assurer une position très précise de la forme secondaire 9 dans le montage 10 qui, une fois serré grâce à des moyens mécaniques de serrage 10c assure aussi un maintien ferme de la forme secondaire 9. Ce maintien ferme et, donc dans une position précise de la forme secondaire 9 par le montage 10 est une des conditions de la précision de mise en oeuvre de l'installation. Le poste de forage 26 comporte, en second lieu et pour chaque montage 10 ou support de montage au moins un foret 12 et notamment un foret principal 12a apte à réaliser le perçage principal 1a et un ou plusieurs forets secondaires 12b apte à réaliser les perçages secondaires 2a, 3a des embouts et prises 2, 3.

Les forets 12a, 12b peuvent être portés par une tête à laquelle sont associés des moyens d'entraînement des forets en rotation et des moyens de coulissement axial des forets. Une telle tête assure également les orientations relatives des différents forets 12a, 12b, notamment des forets secondaires 12b par rapport au foret principal 12a. Une telle tête peut également permettre le réglage des forets 12, en fonction de la rampe à réaliser. Par conséquent, l'installation selon l'invention, et notamment le poste de forage 26, permet la réalisation de rampes de formes très différentes, par simple réglage du poste de forage 26. Ainsi qu'il a été mentionné précédemment, le montage 10 est agencé de manière que les extrêmités 11 de la forme secondaire 9 soient accessibles depuis l'extérieur pour permettre l'introduction des forets 12. Le poste de forage 26 est également agencé de manière que les perçages 1a, 2a, 3a puissent avoir une longueur axiale contrôlée, notamment être des perçages borgnes. En sortie du poste de forage 26, on obtient la forme tertiaire 13 qui est percée.

Le second poste d'usinage 27 permet la réalisation de détail des embouts 2, prises 3 et moyens 4 ainsi que les débouchés des perçages 1a, 2a, 3a, de la forme tertiaire 13.

Le poste 28 d'ébavurage électrochimique et de nettoyage permet la réalisation de l'ébavurage et le nettoyage de la forme tertiaire 13 en vue notamment d'arrondir les jonctions entre le perçage 1a et les perçages 2a, 3a, et d'enlever les copeaux et saletés résultant de la fabrication.

Le mode de réalisation de détail des différents postes de l'installation est à la portée de l'homme de métier.

Il est bien entendu que l'installation comporte également des moyens de transfert appropriés entre les différents postes.

L'invention propose enfin une rampe d'injection caractérisée par le fait qu'elle est obtenue par la mise en oeuvre du procédé et/ou grâce à l'installation précédemment décrite. Ainsi qu'il a été mentionné précédemment, la rampe comporte :

– au moins un tube creux principal 1 rectiligne auquel sont associés rigidement,
– au moins un embout de prise de carburant 2,
– au moins une, et généralement plusieurs, prises d'injecteurs 3

– des moyens 4 de fixation de la rampe

Grâce à l'emploi combiné d'un alliage d'aluminium comme matériau constitutif du procédé précédemment décrit, la rampe selon l'invention, est monobloc ; légère ; sans soudure (sauf éventuellement la soudure d'un bouchon 14) ; de forme générale pouvant être très tourmentée et complexe, notamment en ce qui concerne l'orientation des embouts 2 et prises 3 par rapport au tube principal 1 ; avec des raccordements intérieurs entre le tube principal 1 (c'est-à-dire le perçage 1a) et les embouts et prises 2, 3 (c'est-à-dire les perçages 2a, 3a) arrondis ; présentant des fibres de l'alliage d'aluminium orientées dans le même sens parallélement ; ayant une excellente rigidité, une excellente résistance à la torsion et au flambage ainsi qu'aux chocs, une résistance aux pressions élevées ; une structure interne homogène.

Par exemple, la rampe selon l'invention peut avoir une longueur hors tout de l'ordre de 53 cm avec 3 prises d'injecteur 3, l'épaisseur des parois de la rampe pouvant varier de 2 mm (pour le tube principal 1) à 7/10ème de mm (pour le débouché des embouts 2 et prises 3), et le tube principal 1 ayant un diamètre extérieur de l'ordre de 20 mm, le perçage principal 1a ayant un diamètre de l'ordre de 14 mm. Une telle rampe peut avoir un poids de l'ordre de 155 grammes. Ainsi que cela résulte de ce qui précède, l'angle entre l'axe du tube principal 1 et les axes des embouts 2 et prises 3 peut varier pour avoir toute valeur nécessitée selon les besoins, soit classiquement 90°, soit toute autre valeur (15°, 30° ou autre).

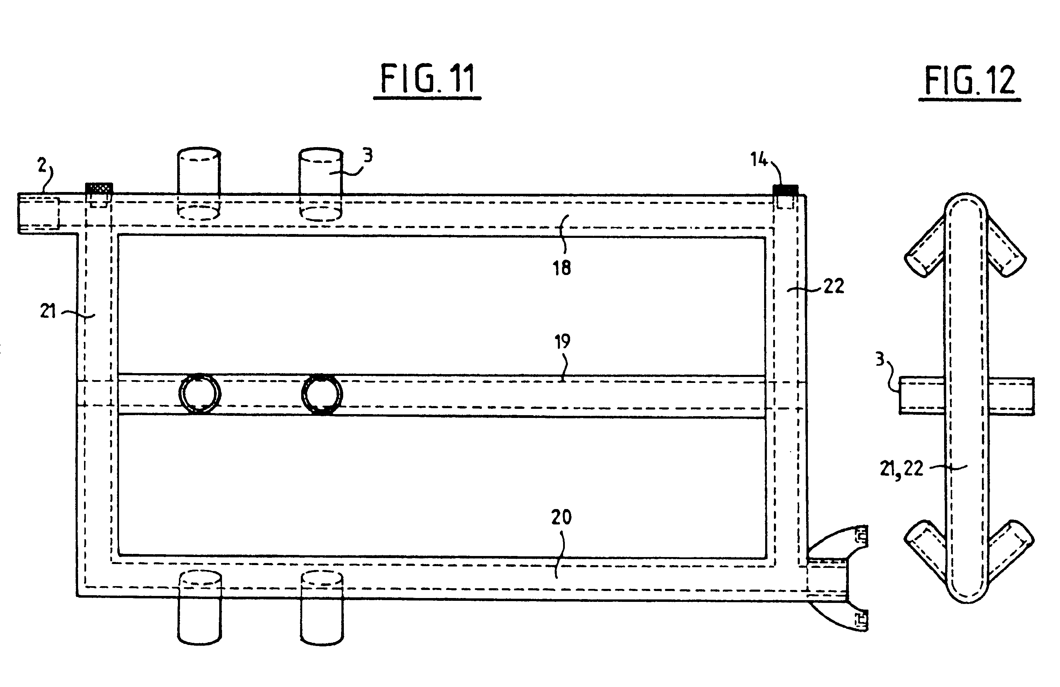

De plus, le procédé selon l'invention permet de réaliser des rampes doubles c'est-à-dire dont le tube principal 1 comporte deux perçages distincts l'un pour l'aller, l'autre pour le retour de carburant (non représentées) ou des rampes "plates" (décrites ultérieurement en référence aux figures 11 et 12).

On décrit maintenant une forme de réalisation possible mais nullement limitative de rampe en se référant aux figures 3 à 10, étant souligné que les caractéristiques décrites s'appliquent aussi à d'autres formes de réalisation possibles, y compris les rampes doubles et "plates" mentionnées précédemment.

Une telle rampe, selon l'invention, est plus spécialement destinée à un moteur à injection pour automobile où elle est interposée entre un ou plusieurs conduits d'amenée de carburant et des injecteurs (non représentés). De tels moteurs à injection et les automobiles auxquelles ils sont destinés requièrent des rampes d'injection présentant des caractéristiques combinées de forme, légèreté, rigidité, résistance, inédites jusqu'à présent.

Selon l'invention, une telle rampe d'injection comporte au moins une saillie de rigidification 16, longitudinale, c'est-à-dire, s'étendant le long du tube principal 1 et à l'extérieur de ce dernier, continue ou non, régulière ou non, monobloc et venue de fabrication avec le tube principal 1. Plus précisément, la saillie 16 est constituée par la zone du voile 8 attenante au tube 1, le voile 8 étant réalisé, comme mentionné précédemment lors de la constitution de la forme primaire 7 par refoulement du matériau constitutif (l'alliage d'aluminium) entre les deux parties 6a, 6b de la matrice 6. La saillie 16 peut avoir, par exemple, et préférentiellement, un contour général carré (ou rectangulaire) de l'ordre de 2 à 2,5 mm de côté (par rapport à un tube principal 1 ayant un diamètre extérieur de l'ordre de 20 mm). La saillie 16 peut avoir, aussi, éventuellement et si nécessaire, un contour de forme différente notamment triangulaire ou trapézoîdal. La saillie 16 s'étend, préférentiellement, sur toute la longueur du tube principal 1, mais peut, si nécessaire, ne s'étendre que sur une partie de longueur seulement du tube 1. La saillie 16 peut être préférentiellement continue ou, au contraire, discontinue. La saillie 16 peut être, en totalité ou en partie, rectiligne et parallèle à l'axe du tube 1 et/ou en totalité ou en partie incurvée et ceci en fonction de la forme donnée au plan ou à la nappe (plus ou moins incurvée) de jonction des deux parties 6a, 6b de la matrice 6. De plus, la saillie 16 peut être de forme régulière et constante le long du tube 1 ou, au contraire, avoir une forme variable selon les nécessités requises par la résistance souhaitée. Enfin, la saillie 16 peut être localisée en tout emplacement souhaité et notamment, par exemple, à l'opposé des prises d'injecteur 3. Préférentiellement, il est prévu deux saillies 16 plus ou moins diamètralement opposées l'une à l'autre et plus ou moins identiques entre elles. Toutefois, l'invention concerne aussi les cas d'une saillie 16 unique ou de plus de deux saillies, ou de saillies non opposées l'une à l'autre, ou de saillies non identiques entre elles. Ces caractéristiques de nombre, de position, de forme (transversale et longitudinale), de régularité (ou d'irrégularité), de continuité (ou de discontinuité), de dimensions de la ou des saillies 16 permettant une grande variété d'applications peuvent être obtenues grâce au procédé selon l'invention et autorisent la réalisation des rigidifications souhaitées tant en localisation, qu'en importance, sans pour autant affecter les autres caractéristiques de la rampe, notamment sa légèreté.

Selon une autre caractéristique, la rampe comporte au moins un bossage 17 transversal sur une prise d'injecteur 3, ce bossage 17 étant monobloc venant de fabrication avec le tube principal 1.

Plus précisément, la rampe comporte un bossage 17 de forme générale cylindrique à base circulaire placé dans la zone de raccordement de la prise d'injecteur 3 et du tube principal 1 et vers l'extérieur de celui-ci, avec lequel peut coopérer un clip 31 de maintien de l'injecteur, la prise d'injecteur 3 ayant une face extérieure cylindrique à base circulaire, notamment du côté de son extrémité libre 11c.

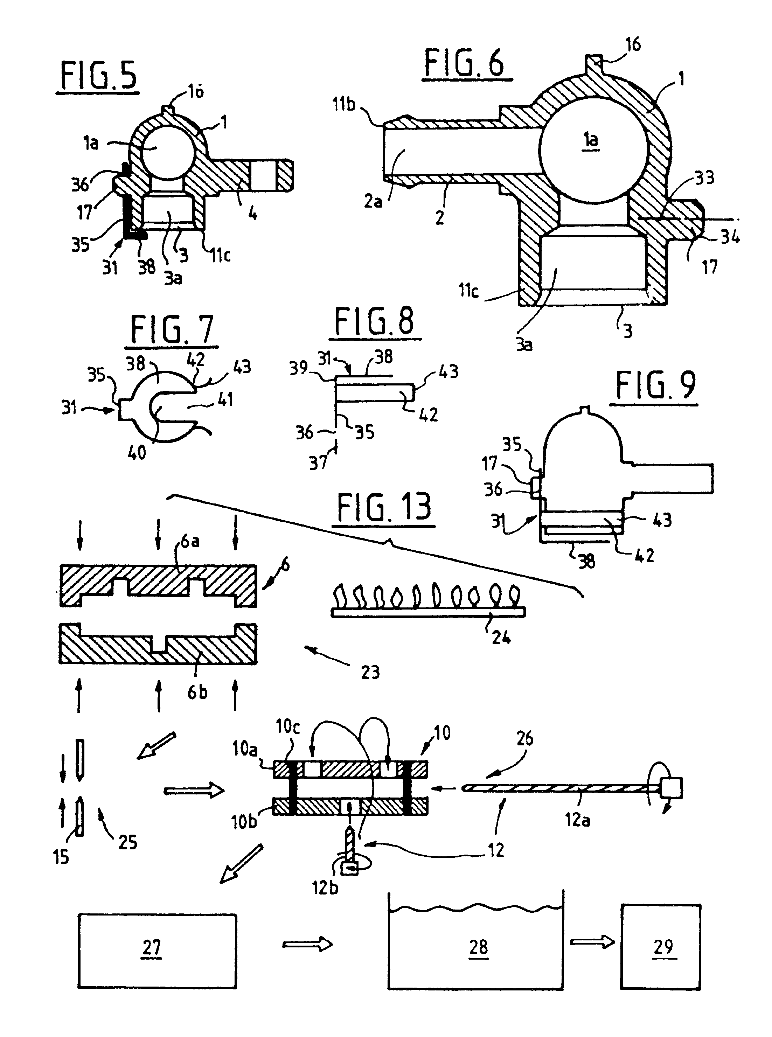

L'axe 33 du bossage 17 est (figures 5 et 6) perpendiculaire au plan défini par les axes de perçages 1a et 3a et le bossage 17 est situé à la partie extrême de la prise d'injecteur 3 de liaison avec le tube principal 1.

Le bossage 17 est préférentiellement terminé, du côté de son extrémité libre, par un arrondi 34 facilitant la mise en place du clip 31. Le bossage 17 a une hauteur et un diamètre aptes à permettre le maintien du clip 31, notamment de l'ordre de 5 mm (pour une rampe telle que celle précédemment décrite).

L'existence du bossage 17 et du clip 31 permet le maintien de l'injecteur dans la prise d'injecteur 2 sans necessiter la présence sur la face extérieure de la prise d'injecteur d'une rainure, gorge ou similaire affectant la résistance de la prise d'injecteur ou entraînant des surépaisseurs.

On se réfère maintenant aux figures 5, 7, 8, 9 en ce qui concerne le clip 31 qui fait partie de l'invention. Le clip 31 comporte essentiellement trois parties : une languette 35 d'accrochage à la rampe, de forme générale plane, comportant un trou 36, à l'une de ses extrémités 37 coopérant avec le bossage 17, cette languette 35 venant s'appliquer sur la face extérieure de la prise d'injecteur 3 parallèlement à son axe ; une fourche 38, plane, fixée rigidement à la languette 35, perpendiculairement, à son autre extrémité 39, cette fourche 38 comportant une échancrure 40 avec une ouverture vers l'extérieur avec laquelle peut coopérer – par coulissement transversal via l'ouverture – une rainure de l'injecteur, l'échancrure 40 étant placée, lorsque le clip est monté sur la rampe en regard (et coaxialement) du débouché du perçage 3a ; la fourche 38 étant alors placée sur l'extrémité 11c et, enfin, une pince élastique 42 fixée rigidement à la languette 35 au voisinage immédiat de la fourche 38, les deux branches incurvées de la pince 42 étant placées de part et d'autre de l'échancrure 40 de manière à venir s'appliquer fermement et par déformation élastique sur la face extérieure de la prise d'injecteur 3. Préférentiellement, les branches de la pince 42 vont en s'écartant vers leur extrémité libre 43 pour faciliter l'introduction relative de la prise d'injecteur 3 dans la pince 42.

L'ensemble du clip 31 est réalisé, par exemple, en métal à partir d'une bande.

Selon une forme de réalisation (figures 11 et 12), possible, la rampe est "plate", étant constituée d'un, et généralement plusieurs tubes transversaux 21, 22, les prises de carburant et d'injecteurs 2, 3, ainsi que les moyens de fixation 4, étant associés aux tubes principaux et/ou aux tubes transversaux 18, 19, 20, 21, 22 la rampe comportant un ou plusieurs bouchons d'obturation 14 des extrémités de forage inutilisées des tubes principaux et/ou transversaux 18, 19, 20, 21, 22.

Toutes les caractéristiques décrites précédemment sont applicables à la rampe "plate" ainsi décrite.

Une telle rampe "plate" a pour avantage de pouvoir être intégrée de façon très complète dans un moteur ; la rampe d'injection perdant alors le caractère de "pièce rapportée" qu'elle présente habituellement. Naturellement, une telle rampe "plate" peut faire l'objet de nombreuses variantes de réalisation de détail, notamment en ce qui concerne le nombre et la disposition des tubes principaux et transversaux 18, 19, 20, 21, 22, le nombre et l'orientation des prises d'injecteurs 3, la forme générale de la rampe.

Selon une caractéristique de l'invention, le voile 8 de matière repoussée lors du matriçage est utilisée non seulement pour la réalisation de la saillie 16 mais aussi comme zone fonctionnelle notamment constituant les moyens 4 de fixation. Cette caractéristique peut être appliquée dans le cas de la rampe "plate".

Dans une variante de réalisation possible, un bouchon 24 est fixé par soudage sur l'extrémité 11a du côté ou a commencé le forage du perçage 1a. Dans une autre variante, le perçage 1a est taraudé à cette extrémité 11c.

## Revendications

1. Procédé de fabrication d'une rampe d'injection de carburant monobloc du type comportant :
- au moins un tube creux principal (1) rectiligne auquel sont associés rigidement :
- au moins un embout de prise de carburant (2),
- au moins une, et généralement plusieurs, prises d'injecteurs (3),
- des moyens (4) de fixation de la rampe, dans lequel :
a) on porte une billette (5) en alliage d'aluminium à une température de l'ordre de 440°C à 450°C et on la place ainsi portée à chaud dans une matrice (6) en deux parties (6a, 6b) ;
b) on réalise un matriçage à chaud de la billette et, à cet effet, on la frappe, par l'intermédiaire de la matrice (6), de manière à lui donner une forme primaire pleine (7), correspondant au moins sensiblement à la forme extérieure de la rampe à fabriquer et comportant, en outre, un ou plusieurs voiles axiaux (8), notamment longitudinaux, constitués par l'alliage d'aluminium refoulé ;
c) on laisse refroidir la forme primaire (7) ainsi réalisée jusqu'à température ambiante ;
d) on effectue un premier usinage à froid de la forme primaire (7) à savoir on coupe aux dimensions axiales exactes souhaitées ;
e) on enlève la (ou les) zone(s) superflue(s) (8b) des voiles de refoulement (8), de manière à obtenir une forme secondaire pleine (9) correspondant au moins partiellement précisément à la forme extérieure de la rampe à fabriquer en vue de permettre ultérieurement un maintien en position précise ;
f) on place la forme secondaire (9) dans un montage de précision (10) et on associe rigidement la forme secondaire (9) à ce montage (10), notamment par serrage mécanique, de manière que la forme secondaire (9) soit maintenue fermement et dans une position précise par le montage (10), les extrémités (11) de la forme secondaire (9) devant comporter un perçage restant accessible de l'extérieur ;
g) on fore à froid la forme secondaire (9) à partir des extrémités (11) au moyen d'un ou plusieurs forets (12) pour réaliser successivement le perçage principal (1a) du tube principal (1) et les perçages secondaires (2a), (3a) de prise de carburant et de prise d'injecteur, et obtenir ainsi une forme tertiaire (13) percée ;
h) on effectue un second usinage de finition à froid de la forme tertiaire (13) pour la réalisation de détail des embouts de jonction des prises de carburant (2) notamment par filetage de l'extrémité de la rampe, des prises d'injecteur (3) et des moyens (4) de fixation de la rampe ;
i) on procède à un ébavurage électrochimique et à un nettoyage, caractérisé en ce que les moyens de fixation de la rampe sont réalisés par l'enlèvement seulement partiel des voiles de refoulement dans l'étape e) et par usinage des zones conservées desdites voiles dans l'étape h).

2. Procédé selon la revendication 1, caractérisé en ce qu'on utilise une matrice et on matrice de manière qu'on réalise une rampe d'injection plate constituée de plusieurs tubes principaux (18, 19, 20) réunis par un ou plusieurs tubes transversaux (21, 22) ; on fore de manière que les conduits des tubes principaux et des tubes transversaux (18, 19, 20, 21, 22) soient en communication ; on fixe par brasage ou soudage sur un tube principal et/ou transversal un ou plusieurs bouchons (14) d'obturation des extrémités de forage inutilisés.

## Ansprüche

1. Fertigungsverfahren für eine Monoblock-Kraftstoffeinspritzleitung mit
- mindestens einem geradlinigen Hauptrohr (1), mit dem folgende Elemente starr verbunden sind:
- mindestens ein Kraftstoffeinfüllstutzen (2)
- mindestens ein, im Allgemeinen mehrere Einspritzanschlüsse (3),
- Mitteln (4) zur Befestigung der Leitung, bei dem
a) ein Schwingarm (5) aus Aluminiumlegierung auf eine Temperatur um 440-450°C erhitzt und in heißem Zustand in eine aus zwei Teilen (6a, 6b) bestehende Matrize (6) gelegt wird,
b) dieser Schwingarm (5) warmgeformt wird, wozu er über die Matrize (6) derart gestaucht wird, daß er eine volle Primärform (7) erhält, die der Außenform der herzustellenden Kraftstoffeinspritzleitung weitgehend entspricht und weiterhin einen oder mehrere axiale Überstände (8) aus gepreßter Aluminiumlegierung insbesondere in Längsrichtung aufweist,

c) die so gebildete Primärform (7) auf Raumtemperatur abgekühlt wird,

d) eine erste Kaltbearbeitung der Primärform (7) durch genaues Zuschneiden auf die gewünschten Achsmaße erfolgt,

e) der bzw. die überstehenden Bereiche (8b) der Stauchungsberstände (8) entfernt werden, wodurch eine volle Sekundärform (9) erhalten wird, die mindestens teilweise genau der Außenform der herzustellenden Kraftstoffeinspritzleitung entspricht, wodurch ein späteres Festhalten in der genauen Position gewährleistet ist,

f) die Sekundärform (9) in eine Präzisionshalterung (10) gelegt und die kundärform (9) insbesondere durch mechanisches Einspannen starr mit dieser Halterung verbunden wird, sodaß die Sekundärform (9) fest und in genauer Position durch Die Halterung (10) Festgehalten wird, wobei die Enden (11) der Sekundärform (9) eine von außen zugängliche Bohrung aufweisen missen,

g) die Sekundärform (9) von den Einden (11) her mit einem oder mehreren Bohrern (12) kalt aufgebohrt wird, wodurch nach und nach die Hauptbohrung (1a) des Hauptrohres (1) und die Nebenbohrungen (2a), (3a) für Kraftstoffaufnahme und Einspritzanschlüsse vorgenommen werden und damit eine aufgebohrte Tertiärform (13) entsteht,

h) die Tertiärform (13) einer kalten Endbearbeitung unterzogen wird, bei der die Anschlußenden für die Kraftstoffaufnahme (2) und insbesondere daß Gewinde am Ende der Einspritzleitung, die Einspritzanschlüsse (3) und die Mittel (4) zur Befestigung der Einspritzleitung bearbeitet werden,

i) das Werkstück elektrochemisch entgratet und gereinigt wird, dadurch gekennzeichnet, daß die Befestigungsmittel (4) durch nur teilweises Entfernen der Stauchungsüberstände bei Fertigungsschritt e) und Bearbeiten der erhaltenen Bereiche dieser Überstände in Fertigungsschritt h) gebildet werden.

2. Fertigungsverfahren nach Patentanspruch 1, dadurch gekennzeichnet, daß eine Matrize verwendet wird und das Gesenkformen derart erfolgt, daß eine flache Kraftstoffeinspritzleitung entsteht, die aus mehreren, über ein oder mehrere Querrohre (21, 22) verbundenen Hauptrohren (18, 19, 20) besteht, wobei die Bohrung derart erfolgt, daß die Leitungen der Haupt- und Querrohrer (18, 19, 20, 21, 22) untereinander verbunden sind und wobei die Enden der nicht verwendeten Bohrungen durch einen oder mehrere auf ein Haupt und/oder Querrohr gelötete oder geschweißte Verschlußstopfen (14) verschlossen werden.

## Claims

1. Method of manufacturing a one-piece fuel distribution pipe comprising :
   • at least one main rectilinear hollow tube (1) with which are rigidly associated :
   • at least one fuel connection socket (2),
   • at least one, and generally several, distribution sockets (3),
   • means (4) for fixing the pipe,
   in which :

a) an aluminium alloy bar is heated to about 440°C to 450°C and thus heated it is placed in a die (6) comprising two parts (6a, 6b) ;

b) the bar (5) is hot stamped and, for this, it is struck, via the die (6), so as to give it a solid primary form (7), corresponding at least substantially to the outer form of the tube to be manufactured and further comprising one or more axial webs (8), particularly longitudinal, formed by the upset aluminium alloy ;

c) the primary form (7) thus obtained is allowed to cool to ambient temperature ;

d) the primary form (7) is subjected to a first cold machining, namely it is cut to the exact axial dimensions desired ;

e) the superfluous zone(s) (8b) of the upset webs (8) is or are removed so as to obtain a solid secondary form (9) corresponding at least partially precisely to the outer form of the pipe to be manufactured so that it can be held subsequently in a precise position ;

f) the secondary form (9) is placed in a precision assembly (10) and the secondary form (9) is rigidly associated with this assembly (10), particularly by mechanical clamping, so that the secondary form (9) is firmly held in a precise position by the assembly (10), the ends (11) of the secondary form (9) comprising a bore remaining accessible from the outside ;

g) the secondary form (9) is cold drilled from the ends (11) by means of one or more drills (12) so as to form successively the main bore (1a) of the main tube (1) and the secondary bores (2a), (3a) for the fuel connection and the injector connection, and so as thus to obtain a tertiary drilled form (13) ;

h) a secondary cold finishing machining of the tertiary form (13) is carried out so as to obtain the detail of the junction sockets of the fuel connections (2) particularly by threading the end of the pipe, of the injector connections (3) and of the means (4) for fixing the pipe ;

i) electro-chemical burring and cleaning are carried out, characterized in that the means for fixing the pipe are formed by only partial removal of the upset webs in step e) and by machining the conserved zones of said webs in step h).

2. Method according to claim 1, characterized in that a die is used and stamping is carried out so as to form a flat distribution pipe formed of several main tubes (18, 19, 20) joined together by one or more transverse tubes (21, 22) ; drilling is carried out so that the conduits of the main tubes and of the transverse tubes (18, 19, 20, 21, 22) are in communication ; fixing is carried out by brazing or welding one or more plugs (14), on a main and/or transverse tube, for closing the unused drilled ends.

## FIG.1

(1)

5

(2)

5

24

6a

(3)

6

6b

2,3

(4)

7

8

(5)

7

11

9

(6)

11,11a

15

25

15

11

10a

10c

10

9

(7)

11

10b

12b

12

(8)

12a

27

2a,3a

13

(9)

11

1a

## FIG.2A

(10)

28

2,3

1

14

(11)

29

1

8a

8

8b

8b

## FIG.2B

8a,16

1

## FIG.10

8a

1

FIG.3

FIG.4

FIG.5

FIG.6

FIG.7

FIG.8

FIG.9

FIG.13

FIG. 11

FIG. 12

EP 0 266 269 B1